# EUROPEAN PATENT APPLICATION

(11) **EP 2 890 150 A1**
(43) Date of publication of application: **01.07.2015**
(21) Application number: 13306863.5
(22) Date of filing: 26.12.2013
(51) Int. Cl.: H04Q 11/00, H04J 14/02

(54) **Optical node for a WDM communication system**

(71) Applicant: ALCATEL LUCENT, 92100 Boulogne-Billancourt (FR)
(72) Inventor: Charlet, Gabriel, 91620 Nozay (FR); Fontana, Andréa, 91620 Nozay (FR)
(74) Representative: Loyer & Abello

(57) **Abstract**

An optical node (1) comprises:
a plurality of client interface modules (1.0) comprising a client-side port (7) for receiving a client service and a segmentation block (7) for segmenting the or each received client service into a plurality of data streams (11) at predefined data rates;
a plurality of WDM transponder modules (30) comprising an encapsulation block (35) for encapsulating the received data streams into transport data frames and a rate-adjustable modulated laser source (31) adapted to generate an optical signal (32) carrying the transport data frames at an adjustable transport data rate on a wavelength channel of a frequency grid; and
an electrical switch module (20) comprising a plurality of client-side ports (22) for receiving the data streams (11) at the predefined data rates, a plurality of network-side ports (23) for passing the data streams (11) to the adjustable WDM transponder modules (30), and a switch matrix (21) configured to create a plurality of transmission paths adapted to pass a respective data stream from the client-side port to the network-side port.

## Description

### Field of the invention

The invention relates to the technical field of optical communication systems, in particular to optical communication systems employing rate-adjustable modulated laser sources.

### Background

Adaptive optical transponders are emerging as an attractive technology in optical communication systems. An adaptive optical transponder makes it possible to transport higher capacity over a shorter reach or smaller capacity over a longer reach.

### Summary

Aspects of the invention stem for the observation that digital data traffic to be transported over an optical network typically comes from and goes to client devices, e.g. layer-3 routers or Ethernet switches, which have fixed bit-rate per port. Aspects of the invention are based on the idea of connecting a plurality of optical transponders having an adjustable bit-rate to a plurality of client-side ports having a fixed bit-rate, in a manner that makes an efficient use of resources.

In an embodiment, the invention provides an optical node for a WDM communication system, comprising:
a plurality of client interface modules, each client interface module comprising:
   a client-side port for receiving a client service,
   a plurality of network-side ports, and
   a segmentation block for segmenting the or each received client service into a plurality of data streams at predefined data rates and passing each data stream to a network-side port of the client interface module;
a plurality of adjustable WDM transponder modules, each adjustable WDM transponder module comprising:
a plurality of client-side ports for receiving a plurality of data streams at the predefined data rates,
   an encapsulation block for encapsulating the received data streams into transport data frames,
a rate-adjustable modulated laser source adapted to generate an optical signal, e.g. an added optical signal in the framework of an ROADM, carrying the transport data frames at an adjustable transport data rate on a wavelength channel of a frequency grid; and
   an electrical switch module comprising:
a plurality of client-side ports connected to the network-side ports of the client interface modules for receiving the data streams at the predefined data rates,
a plurality of network-side ports connected to the client-side ports of the adjustable WDM transponder modules for passing the data streams to the adjustable WDM transponder modules, and
a switch matrix configured to create a plurality of transmission paths, each transmission path connecting a respective client-side port to a respective network-side port and adapted to pass a respective data stream from the client-side port to the network-side port, wherein a total number of the network-side ports connected to the adjustable WDM transponder modules is higher than a total number of the client-side ports connected to the client interface modules,
wherein the switch matrix is configured to pass all the data streams of a same client service to a same adjustable WDM transponder module.

Thanks to these features, the client services are segmented in data streams having a smaller capacity than the transmission capacity of a WDM transponder module and the switch matrix provides a flexible, reconfigurable allocation of the individual data streams to the WDM transponder module. In particular, the switch makes it possible to allocate a higher number of data streams and/or data streams having a higher capacity to a WDM transponder module having a higher capacity, and to allocate a lower number of data streams and/or data streams having a lower capacity to a WDM transponder module having a lower capacity. This can be changed over time by reconfiguring the WDM transponders and the switch matrix.

According to embodiments, such an optical node can comprise one or more of the features below.

In embodiments, the optical node is configured in a bidirectional manner, wherein each of the client interface modules, adjustable WDM transponder modules and electrical switch module are bidirectional,
wherein each adjustable WDM transponder module further comprises an optical receiver adapted to demodulate a dropped optical signal carrying transport data frames on a wavelength channel, e.g. a wavelength channel of the frequency grid, and a segmentation block for segmenting the received transport data frames into a plurality of dropped data streams at the predefined data rates and passing each dropped data stream to a client-side port of the adjustable WDM transponder module;
wherein the transmission paths created by the switch matrix between the client-side ports and network-side ports are bidirectional, and
wherein each client interface module is configured to transmit a client service comprising a plurality of the dropped data streams through the client-side port of the client interface module.

In an embodiment, the optical node comprises a Field Programmable Gate Array (FPGA) configured to provide the electrical switch matrix. An FPGA makes it possible to provide a processing-free non-blocking matrix with a high number of input/output ports at a competitive cost.

In an embodiment, the predefined data rates are selected in the group consisting of 10Gb/s and 25Gb/s.

The client services received at the client-side interface modules may be provided under in a variety of protocols and formats. In an embodiment, a client service comprises one of a 100Gigabit Ethernet traffic flow and a 40Gigabit Ethernet traffic flow and the data streams obtained by segmenting the client service comprise a plurality of physical lanes of the traffic flow.

For the sake of illustration, it is recalled that Gigabit Ethernet flows defined by the IEEE 802.3 standards include different optical Physical Media Dependent layers, such as:
- 40GBASE-SR4 and 100GBASE-SR10 PMDs are based on 850nm technology and support transmission over at least 100m OM3 parallel fibers and at least 150m OM4 parallel fibers. The effective rate per lane is 10 gigabit per second, which when 64B/66B encoded results in a signaling rate of10.3125 gigabaud per second. Therefore, 40GBASE-SR4 supports transmission of 40 Gigabit Ethernet over a parallel fiber medium consisting of 4 parallel OM3 fibers in each direction, while the 100GBASE-SR10 PMD supports the transmission of 100 Gigabit Ethernet over a parallel fiber medium consisting of 10 parallel OM3 fibers in each direction.
- 40GBASE-LR4 is based on 1310nm, coarse wave division multiplexing (CWDM) technology and supports transmission over at least 10km on SMF. The grid is based on the ITU G.694.2specification using wavelengths of 1270, 1290, 1310, and 1330nm. The effective data rate per lambda is 10 gigabit per second, which when 64B/66B encoded results in a signaling rate of10.3125 gigabaud per second. In this way, the 40GBASE-LR4 PMD supports transmission of 40 Gigabit Ethernet over 4wavelengths on each SMF in each direction.
- 100GBASE-LR4 is based on 1310nm, dense wave division multiplexing (WDM) technology and supports transmission over at least 10km on SMF. The grid is based on the ITU G.694.1specification using wavelengths of 1295, 1300, 1305, and 1310nm. The effective data rate per lambda is 25 gigabit per second, which when 64B/66B encoded results in a signaling rate of28.78125 gigabaud per second. In this way, the 100GBASE-LR4 PMD supports transmission of 100Gigabit Ethernet over 4 wavelengths on each SMF in each direction.
- 100GBASE-ER4 is based on 1310nm, WDM technology and supports transmission over at least 40km on SMF. The grid is based on the ITU G.694.1 specification using wavelengths of 1295, 1300, 1305, and 1310nm. The effective data rate per lambda is 25 gigabit per second, which when 64B/66Bencoded results in a signaling rate of 28.78125 gigabaud per second. Therefore, the 100GBASE-LR4PMD supports transmission of 100 Gigabit Ethernet over 4 wavelengths on each SMF in each direction.

In an embodiment, the optical node further comprises a set of optical fibers connecting the network-side ports of the client interface modules to the client-side ports of the electrical switch module. In an embodiment, each network-side port of the client interface modules comprises a modulated laser source, e.g. vertical-cavity surface-emitting laser (VCSEL). As an alternative, the set of optical fibers may be provided in the form of active cables. Active cables are electrically connected to the board and include the optical part within the cable, i.e. laser, fiber and photodiode.

In the bidirectional arrangement, a similar modulated laser source is provided in each client-side port of the electrical switch module.

In an embodiment, the optical node further comprises a set of optical fibers connecting the network-side ports of the electrical switch module to the client-side ports of the WDM transponder modules. In an embodiment, each network-side port of the electrical switch module comprises a modulated laser source, e.g. vertical-cavity surface-emitting laser (VCSEL). In the bidirectional arrangement, a similar modulated laser source is provided in each client-side port of the WDM transponder module. As an alternative, the set of optical fibers may be provided in the form of active cables. Active cables are electrically connected to the board and include the optical part within the caldle, i.e. laser, fiber and photodiode.

In an embodiment, the optical node further comprises a second electrical switch module comprising:
a second plurality of client-side ports connected to the network-side ports of the client interface modules for receiving the data streams at the predefined data rates,
a second plurality of network-side ports connected to the client-side ports of the adjustable WDM transponder modules for passing the data streams to the adjustable WDM transponder modules, and
a second switch matrix configurable to create a second plurality of transmission paths, each transmission path connecting a respective client-side port to a respective network-side port and adapted to pass a respective data stream from the client-side port to the network-side port, wherein a total number of the network-side ports connected to the adjustable WDM transponder modules is higher than a total number of the client-side ports connected to the client interface modules,
wherein each network-side port of the client interface modules is connected in parallel to client-side ports of both the first electrical switch module and the second electrical switch module and
wherein each client-side port of the WDM transponder modules is connected in parallel to network-side ports of both the first electrical switch module and the second electrical switch module.

The adjustable WDM transponder modules may provide adjustable bit-rates by varying the modulation rates and/or the modulation formats.

In an embodiment, the rate-adjustable modulated laser source comprises an adjustable modulator adapted to selectively employ a plurality of modulation formats. For example, the modulation formats may be selected in the group consisting of Quadratic Phase-Shift Keying with or without Set Partitioning (SP-QPSK or QPSK) and Quadrature Amplitude Modulation in a variety of constellations and with or without Set Partitioning, e.g. SP-8QAM, 8QAM, SP-16QAM, 16QAM and 32QAM. Thanks to these features, the transmission capacity of the optical signal can be adjusted at the same time as the transmission reach of the signal, by selecting a more or less demanding modulation format.

In an embodiment, a rate-adjustable modulated laser source comprises an adjustable modulator adapted to selectively employ a plurality of symbol rates. Preferably, the symbol rates are between 10 and 100 Gbaud, for example selected in the group consisting of 26, 32 and 43 Gbaud. Thanks to these features, the transmission capacity of the optical signal can be adjusted at the same time as the power consumption of the WDM transponder, by selecting a higher or lower symbol rate.

In an embodiment, a WDM transponder module comprises the client-side ports in a higher number than the number of network-side ports in one client-interface module. In an embodiment, the WDM transponder module comprises 26 client-side ports whereas the client-interface module comprises 10 network-side ports. Thanks to these features, a WDM transponder module is capable of aggregating multiple client services received from multiple client interface modules.

In an embodiment, the optical node further comprises an all-optical switching fabric connected to the WDM transponder modules. Such switching fabric may be configured as a Reconfigurable Add and Drop Multiplexer (ROADM) or optical cross-connect with any degree of connectivity. In ROADM architecture, the traffic generated by the WDM transponder modules is referred to as added signals and the traffic received by the WDM transponder modules is referred to as dropped signals, as opposed to transiting signals that are switched transparently through the ROADM.

In embodiments, a client-side port of a client interface module comprises a transceiver compliant to an XFP or CFP Multi-source agreement.

### Brief description of the drawings

These and other aspects of the invention will be apparent from and elucidated with reference to the embodiments described hereinafter, by way of example, with reference to the drawings.
Figure 1 is a functional representation of an optical transport node in accordance with an embodiment connected to a Layer-3 router.
Figure 2 is a more detailed functional representation the optical transport node of Figure 1.
Figure 3 is a functional representation similar to Figure 2 showing another embodiment of the optical transport node.
Figure 4 is a functional representation of an optical receiver which may be employed in the optical transport node.
Figure 5 is a functional representation of an optical transmitter which may be employed in the optical transport node.

### Detailed description of the embodiments

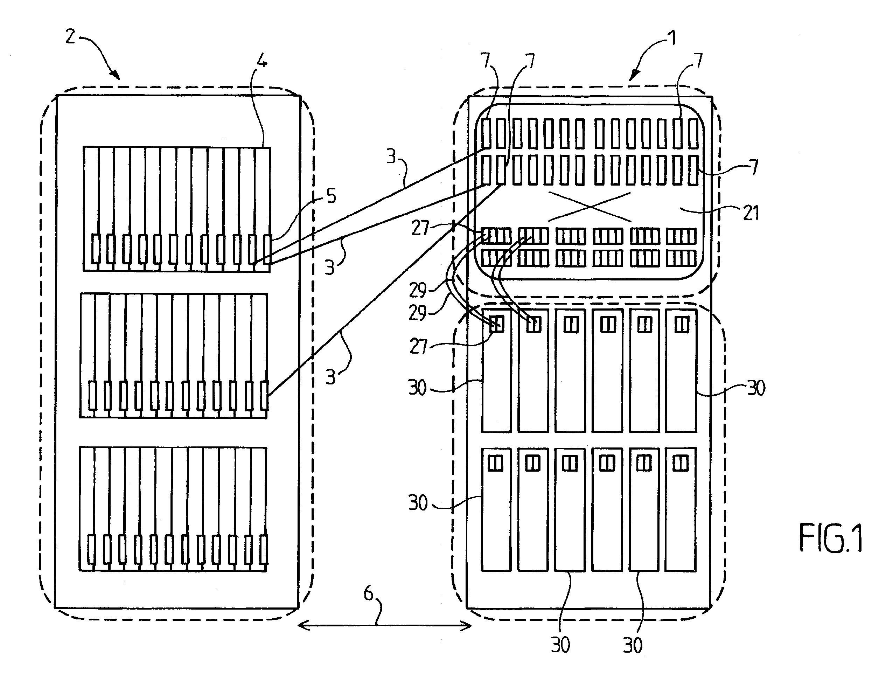

With reference to Figure 1, an optical transport node 1 is connected to a client router 2 by a set of physical links 3. The optical transport node 1 is further connected to a WDM optical network not shown and serves to convey digital data traffic from the client router 2 to the WDM optical network and from the WDM optical network to the client router 2 in a bidirectional manner.

The client router 2 comprises a plurality of rackable or shelvable line cards 4 arranged in a frame in a well-known manner. Each line card comprises a bidirectional interface 5 that has a fixed data-rate capacity in each direction, i.e. transmitter and receiver. The optical transport node 1 has client interfaces 7 that are connected to the interfaces 5 of the client router 2 in a one-to-one ratio. Namely, each client interface 7 is connected to a respective bidirectional interface 5 by a physical link 3. For optimal use of the optical transport node 1, all client interfaces 7 should be connected to the client router 2 or to a plurality of similar client devices. However, it is also possible to use the optical transport node 1 for less than its maximum capacity with only a subset of the client interfaces 7 being connected to client router 2. Preferably, the optical transport node 1 is built in a modular manner to be easily expandable as traffic capacity demand grows.

The physical nature of the physical links 3 may be diverse. Preferably the physical links 3 are optical fibers, so as to accommodate a transmission distance 6 of up to a few kilometers between the client router 2 and the optical transport node 1. The fixed-rate interfaces 5 and 7 of the client router 2 and the optical transport node 1 may be configured as XFP (10 Gigabit Small Form Factor Pluggable) transceivers to convey a bidirectional client service at a rate of 10Gb/s or as CFP (C Form Factor Pluggable) transceivers to convey a bidirectional client service at a rate of 100Gb/s, or as a mix of transceivers of both types.

The fixed-rate data flow that transits over each physical link 3 will be referred to as a client service. In particular, an uplink client service is transmitted from the client router 2 to the WDM optical network and a downlink client service is transmitted in the opposite way over each physical link 3. The data-rate is usually the same in both directions. The physical link 3 may be a single strand of optical fiber or a multi-fiber cable depending on the format of the client service. For example, CFP transceivers are available for different flavors of 10OGigabit Ethernet.

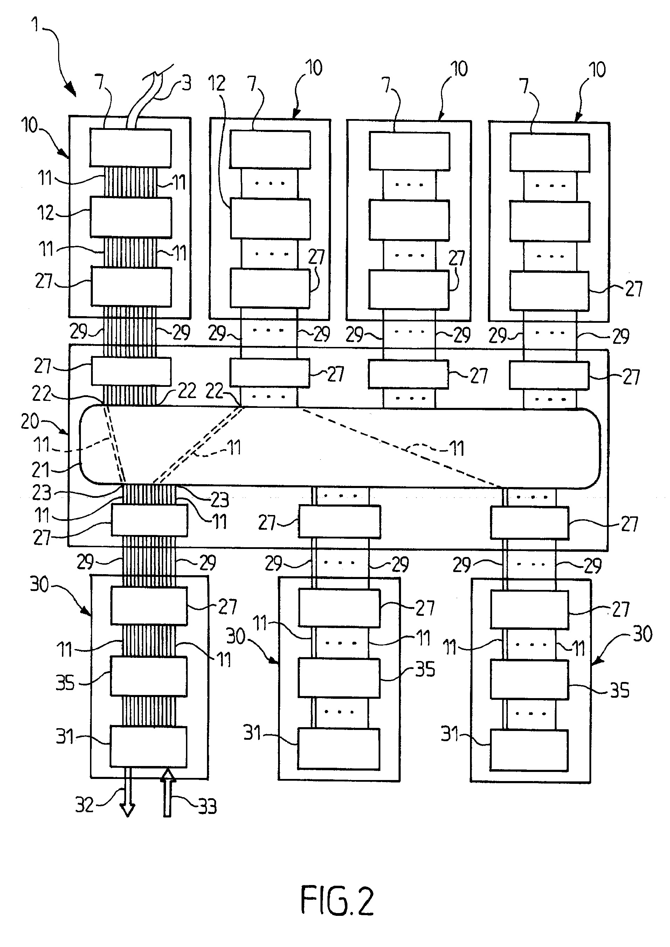

The optical transport node 1 will now be described with reference to figures 1 and 2. The optical transport node 1 has three main functional parts: client interface modules 10, an electrical switch module 20 and WDM transponder modules 30. Each client interface module 10 comprises a client interface 7 that has a physical port for connecting the corresponding physical link 3.

Each WDM transponder module 30 comprises a rate-adjustable bidirectional optical transponder 31 connected to the optical network for sending a high-capacity long-reach modulated signal on a given wavelength channel or set of wavelength channels, as indicated by arrow 32, and for receiving a high-capacity long-reach modulated signal on a given wavelength channel or set of wavelength channels, as indicated by arrow 33. The optical transponder 31 may be wavelength-tunable to increase deployment flexibility. Preferably, the optical transponder 31 operates on the same wavelength channel or set of wavelength channels in transmission and in reception.

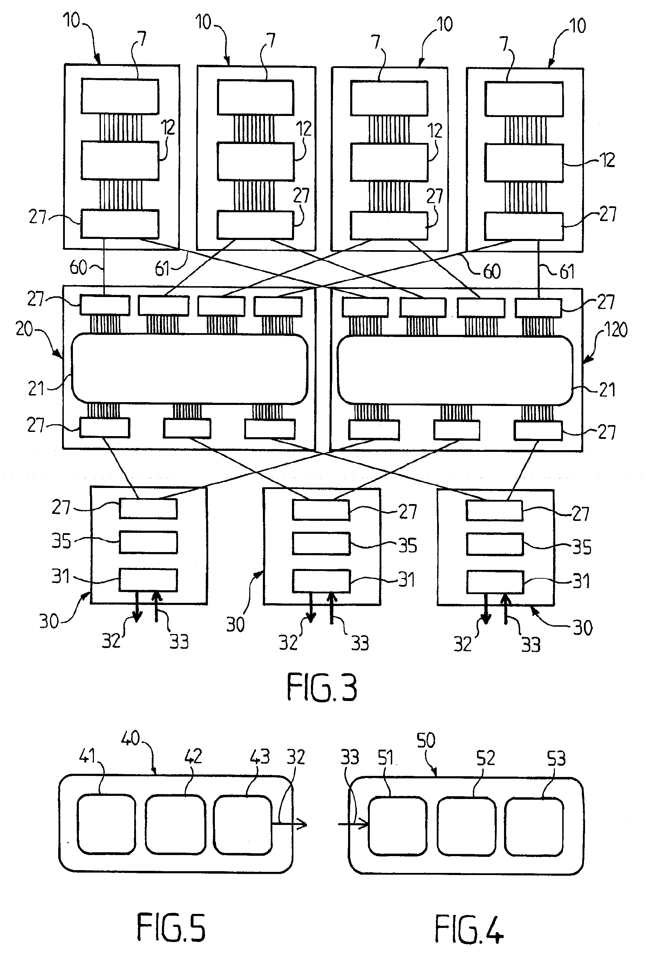

Figs. 4 and 5 illustrate an embodiment of the optical transponder 31 with the reception functional block 50 being shown on Fig. 4 and the transmission functional block 40 being shown on Fig. 5.

The transmission functional block 40 comprises a framer and FEC encoder module 41 for arranging the digital data into transport frames and applying forward-error correction codes, a modulation module 42 for modulating the transport frames in accordance with a selected modulation method and a digital-to-analog converter 43 that operates at a given oversampling ratio, e.g. equal to 2 or other value. As an illustration, a data flow provided at a rate of 100Gb/s at the framer stage may exhibit an actual data rate of 130Gb/s after FEC encoding, then a symbol rate of 32.5 Gbaud/s at the modulation stage, e.g. when PDM-QPSK modulation is employed, and then a sample rate of 65 Gigasamples/s at the DAC stage.

The reception functional block 50 for a coherent optical receiver comprises an ADC and CD compensation module 51 that includes an analog-to-digital converter (ADC) and a digital signal processor configured to perform chromatic dispersion (CD) compensation, a data processing stage 52 for performing polarization demultiplexing, carrier frequency estimation and carrier phase estimation, and a framer and FEC decoder module 41 for retrieving the transport frames that contain the digital data.

Preferably, the modulation module 42 is configurable to employ one among several predefined modulation formats and/or one among several predefined symbol rates to provide rate-adjustable operations. Table 1 illustrates the transmission data-rates that may be obtained by using a variety of modulation methods and symbol-rates. This list is not exhaustive. Table 1 also provides the total data-rates that are obtainable with some multi-carrier transponders, i.e. a WDM transponder that generates several wavelength channels in parallel.

Table 2 illustrates again the transmission data-rates that may be obtained by using a variety of modulation methods at a symbol-rate of 43Gbaud and, for each modulation method, a collection of fixed-rate client services that may be transported simultaneously by the corresponding wavelength channel to make an optimal use of the WDM transponder capacity. This list is not exhaustive. Table 2 also provides the transmission reach that is obtainable with each modulation method. It should be noted that transmission reach is only dependent on modulation format, and not on Baud rate.

**Table 1: WDM transponder bit rate in Gb/s as a function of symbol rate, format and carrier count**

| Modulation Rate (Gbaud) | Modulation Formats | | | | | | |
|---|---|---|---|---|---|---|---|
| | SP-QPSK | QPSK | SP-8QAM | 8QAM | SP-16QAM | 16QAM | 32QAM |
| 26 | 60 | 80 | 100 | 120 | 140 | 160 | 200 |
| 32 | 75 | 100 | 125 | 150 | 175 | 200 | 250 |
| 43 | 100 | 133 | 166 | 200 | 233 | 266 | 333 |
| 43 with Dual-carrier | 200 | 266 | 333 | 400 | 466 | 533 | 666 |
| 43 with Triple-carrier | 300 | 400 | 500 | 600 | 700 | 800 | 1000 |
| 32 with Quadruple-carrier | 300 | 400 | 500 | 600 | 700 | 800 | 1000 |

**Table 2: WDM transponder bit rate and reach as a function format**

| Modulation Format | SP-QPSK | QPSK | SP-8QAM | 8QAM | SP-16QAM | 16QAM |
|---|---|---|---|---|---|---|
| Total bit rate in Gbit/s(@43Gbaud) | 100 | 133 | 166 | 200 | 233 | 266 |
| Transported services (number of services x service bit rate) | 10x10 or 2x40 or 1x100 | 13x10 or 3x40 or 3x10 +1x100 | 16x10 or 4x40 or 6x10 +1x100 | 20x10 or 5x40 or 2x100 | 23x10 or 3x10+ 2x100 | 26x10 or 6x10+ 2x100 |
| Reach normalized to 100G QPSK @32Gbaud | 1..65 | 1 | 0.65 | 0.4 | 0.3 | 0.2 |

The use of rate adjustable transponders that employ several modulation formats makes it possible to adjust capacity as a function of the transmission reach to be attained. For example, PDM QPSK is a preferred modulation format for 100Gb/s. With 32Gbaud modulation speed and soft-decision processing, PDM QPSK modulated signals can propagate over a very long distance, e.g. 2500km for terrestrial systems and about 10,000km for undersea systems. 43Gbaud may be employed to carry 200Gb/s with 8QAM over reasonable distance, e.g. about 1000km for terrestrial systems and 4000km in undersea systems. 43Gbaud coherent transponders can be made with CMOS technology.

When SP-8QAM is used, 166Gb/s can be transported per wavelength. This corresponds to 333Gb/s for a dual carrier transponder and five 100G services or 500Gb/s in triple carrier configuration. It is thus possible to transport three 100Gb/s client services over a long distance with such dual carrier transponder. 8QAM is capable of transporting four 100G services in dual carrier. However the transmission reach with SP-8QAM is almost 65% longer than the reach of 8QAM.

The use of rate adjustable transponders that employ several symbol rates, e.g. from 43 to 32 or 26Gbaud, makes it possible to adjust energy consumption. Indeed, in a WDM transponder as depicted in Figs 4 and 5, power consumption is linked to bit/s in the framer/FEC module 41, to the modulation speed in Gbaud in the digital signal processor 52 at receiver end (CMA/CFE/CPE) and to the sampling rate in DAC 43 and ADC and CD compensation module 51. During some periods where traffic is lower, for example at night, or during the early phase of life of a network where traffic capacity demand is low, the bit rate, baud rate and sampling rate may be reduced.

Turning back to Figs 1 and 2, the electrical switch module 20 is an adaptation switch that serves to fit the fixed-rate client services into the rate-adjustable long-reach signals generated by the WDM transponder modules 30 without waste of transmission capacity. For that purpose, two main ideas are implemented. Firstly, the electrical switch module 20 switches individual data streams that have a finer granularity than the client services exchanged at the client interfaces 7. Secondly, the electrical switch module 20 has a higher number of ports on the network-side than the number of ports on the client-side, so that any extra capacity beyond what is actually required by traffic demands is mostly provided on the WDM transponder side and not, or as little as possible, on the client device side. Namely, this arrangement stems from two observations:
- that the total data rate that an adjustable WDM transponder is capable of transmitting depends on the destination distance, hence it varies with traffic demands, whereas IP routers and Ethernet switches have a fixed rate per port, and
- that it is more cost effective to have some WDM transponders that become unnecessary at certain periods of time, than to provide extra client interfaces that would be able to always feed all WDM transponders at their full capacity.

The operations of the electrical switch module 20 may be controlled so that, at any point in time, a minimal number of WDM transponders are operated at their highest capacity, in view of the destination to be reached, whereas the rest of the WDM transponders are turned off. In other words, the adaptation switch is used to minimize the number of WDM line cards required to transport the capacity over the desired reach.

For that purpose, a control method that may be employed consists of:
- Determining the destinations of the client services and the total capacity required per destination,
- For each destination, selecting a modulation method that achieves the corresponding transmission reach while optimizing the transmission capacity per WDM transponder,
- Determining a number of WDM transponders needed to transport the required capacity and configuring the needed WDM transponders to use the selected modulation method,
- Configuring the electrical switch module 20 to aggregate all the traffic intended for that destination in the one or more WDM transponders that have been configured for the given destination.

The operations of the electrical switch module 20 will now be described in more details with reference to a 100 Gb/s uplink client service received from a CFP transceiver of a client interface 7, e.g. in accordance with protocols such as 100G Ethernet or OTU4.

In the client interface 7, the client service at a rate of 100Gb/s is firstly segmented into a plurality of data streams at a lower rate, e.g. ten data streams 11 at a rate of 10Gb/s as illustrated or four data streams at a rate of 25Gb/s. In an embodiment, the data streams 11 correspond to the 10Gb/s or 25Gb/s physical lanes of a standard 100GE physical layer.

A data processing module 12 may be provided in the client interface module 10 to perform functions such as incoming traffic monitoring, skew management, checking of signal identity and signal encapsulation.

Then the data streams 11 are sent to the client-side ports of the switch matrix 21. The switch matrix 21 may be implemented as a non-blocking non-processing FPGA that is configurable to pass data streams between any one of the client side ports 22 and any one of the network side ports 23, as illustrated by the dashed lines 11.

A suitable FPGA with a large number of input/output ports is available from the corporation Xilinx®, e.g. with 96 ports at 12Gb/s corresponding to a switching capability close to 1Tb/s, or from the corporation Altera, e.g. with 128 ports at 14Gb/s and 48 ports at 28Gb/s enabling to switch around 2.5Tb/s.

From the switch matrix 21, the uplink data streams 11 reach the WDM transponder modules 30 as a function of the switch configuration. The WDM transponder module 30 comprises a framer module 35, e.g.an FPGA, configured to combine all the incoming data streams 11, which correspond to one or more client services to be transmitted in an aggregated manner by the optical transponder 31. For example, one 100G client service in the form of ten 10G data streams 11 is aggregated with three 10G client services into an aggregated 130Gb/s signal that can be eventually transmitted by the optical transponder 31 with a suitable modulation format, e.g. QPSK at 43 Gbaud. Many other aggregation schemes are given in table 2 for illustration.

It is noted that segmentation of client services may be achieved in different manners. A 100Gb/s client service may also be split into five data streams 11 at 10Gb/s plus two data streams 11 at 25 Gb/s. An uplink client service that comes at a rate of 40 Gb/s at the client interface 7 may be split into four data streams 11 at 10Gb/s. An uplink client service that already comes at a rate of 10 Gb/s at the client interface 7, e.g. through an XFP transceiver, need not be split into smaller data streams and can be passed as a whole through the switch matrix 21.

In an embodiment that facilitates modularity, each client interface module 10 is built as a pluggable line card and/or each WDM transponder module 30 is built as a pluggable line card. In that case, optical fiber links 29 are deployed between the corresponding line cards 10 and/or 30 and the switch module 20. In an embodiment, the optical fiber links 29 are provided in the form of active cables.

For that purpose, short-reach optical interfaces 27 may be arranged in the client interface modules 10, the WDM transponder modules 30 and in the switch module 20 on both the client side and the network side, as illustrated in Fig. 2. The short-reach optical interfaces 27 preferably employ VCSELs, which are extremely cost effective modulated laser sources adapted to transport 10Gb/s over a few meters of multimode fiber. Moreover, arrays of VCSEL are easily available. VCSELs are also available with higher bit-rates, e.g. 28Gb/s. It must be noted that the speed of a short-reach optical interface 27 must be the same as the speed of the corresponding port 22 or 23 of switch matrix 21. As shown on Fig. 2, each optical interface 27 preferably comprises one optical fiber 29 for each data stream 11.

Physical separation of the client interface modules 10 and WDM transponder modules 30 from the switching matrix 21 is also attractive for redundancy as the switch matrix can be doubled. A corresponding embodiment of the optical transport node is illustrated on Fig. 3. Elements identical or similar to those of Fig. 2 are designated by the same numerals.

With reference to Fig. 3, two identical electrical switch modules 20 and 120 are shown. In the client interface module 10, the short-reach optical interface 27 is modified to accommodate two optical cables 60 and 61 respectively connected to both switch modules 20 and 120. In addition, a selection switch is provided in the client interface module 10 to activate either cable 60 or cable 61. It should be noted that an optical cable 60 or 61 comprises a plurality of the optical fibers 29 shown on Figure 2, e.g. ten fibers each.

The short-reach optical interface 27 in the WDM transponder module 30 is modified in the same manner.

The additional switch module 120 may be activated temporarily while the switch module 20 is being reconfigured or repaired.

While the above description refers mostly to uplink client services, the optical transport node 1 is preferably built for bidirectional operations. Hence, all the above-described components may operate in a bidirectional manner. The operation of the optical transport node 1 for a downlink client service will now be described.

A modulated long-reach optical channel 33 is received by the optical transponder 31 and the client service is obtained by demodulation of that channel, in addition to any further client services that may have been transmitted in an aggregated manner. The framer module 35 identifies each client service as a function of their destination and splits them into downlink data streams to be switched by the switch matrix 21, down to the appropriate client interface module 10, where the downlink data streams constituting the client service are reunited and reformatted for transmission through the client interface 7, as function of the protocols employed, e.g. 100GE or OTU 4.

Elements such as the control units and other functional modules could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical node (1) for a WDM communication system, comprising:
a plurality of client interface modules (10), each client interface module comprising:
a client-side port (7)for receiving a client service,
a plurality of network-side ports, and
a segmentation block (7) for segmenting the or each received client service into a plurality of data streams (11) at predefined data rates and passing each data stream to a network-side port of the client interface module;
a plurality of adjustable WDM transponder modules (30), each adjustable WDM transponder module comprising:
a plurality of client-side ports for receiving a plurality of data streams (11) at the predefined data rates,
an encapsulation block (35) for encapsulating the received data streams into transport data frames,
a rate-adjustable modulated laser source (31) adapted to generate an optical signal (32) carrying the transport data frames at an adjustable transport data rate on a wavelength channel of a frequency grid; and
an electrical switch module (20) comprising:
a plurality of client-side ports (22) connected to the network-side ports of the client interface modules (10) for receiving the data streams (11) at the predefined data rates,
a plurality of network-side ports (23) connected to the client-side ports of the adjustable WDM transponder modules for passing the data streams (11) to the adjustable WDM transponder modules (30), and
a switch matrix (21) configured to create a plurality of transmission paths, each transmission path connecting a respective client-side port (22) to a respective network-side port (23) and adapted to pass a respective data stream from the client-side port to the network-side port, wherein a total number of the network-side ports connected to the adjustable WDM transponder modules (30) is higher than a total number of the client-side ports connected to the client interface modules (1.0), wherein the switch matrix is configured to pass all the data streams of a same client service to a same adjustable WDM transponder module.

2. An optical node in accordance with claim 1, configured in a bidirectional manner, wherein each of the client interface modules (10), adjustable WDM transponder modules (30) and electrical switch module (20) are bidirectional,
wherein each adjustable WDM transponder module (30) further comprises an optical receiver adapted to demodulate a dropped optical signal (33) carrying transport data frames on a wavelength channel and a segmentation block (35) for segmenting the received transport data frames into a plurality of dropped data streams at the predefined data rates and passing each dropped data stream to a client-side port of the adjustable WDM transponder module;
wherein the transmission paths created by the switch matrix (21) between the client-side ports and network-side ports are bidirectional, and
wherein each client interface module (10) is configured to transmit a client service comprising a plurality of the dropped data streams through the client-side port of the client interface module.

3. An optical node in accordance with claim 1 or 2, further comprising a Field Programmable Gate Array configured to provide the switch matrix (21).

4. An optical node in accordance with any one of claims 1 to 3, wherein the predefined data rates are selected in the group consisting of 10Gb/s and 25Gb/s.

5. An optical node in accordance with any one of claims 1 to 4, wherein a client service comprises one of a 100Gigabit Ethernet traffic flow and a 40Gigabit Ethernet traffic flow and wherein the data streams (11) are obtained by segmenting the client service comprise a plurality of physical lanes of the traffic flow.

6. An optical node in accordance with any one of claims 1 to 5, further comprising a set of optical fibers (29) connecting the network-side ports of the client interface modules to the client-side ports of the electrical switch module.

7. An optical node in accordance with any one of claims 1 to 6, further comprising a set of optical fibers (29) connecting the network-side ports of the electrical switch module to the client-side ports of the WDM transponder modules.

8. An optical node in accordance with any one of claims 1 to 7, further comprising a second electrical switch module (120) comprising:
a second plurality of client-side ports connected to the network-side ports of the client interface modules for receiving the data streams at the predefined data rates,
a second plurality of network-side ports connected to the client-side ports of the adjustable WDM transponder modules for passing the data streams to the adjustable WDM transponder modules, and
a second switch matrix (21) configurable to create a second plurality of transmission paths, each transmission path connecting a respective client-side port to a respective network-side port and adapted to pass a respective data stream from the client-side port to the network-side port, wherein a total number of the network-side ports connected to the adjustable WDM transponder modules is higher than a total number of the client-side ports connected to the client interface modules,
wherein each network-side port of the client interface modules (10) is connected in parallel to client-side ports of both the first electrical switch module (20) and the second electrical switch module (120) and
wherein each client-side port of the WDM transponder modules (30) is connected in parallel to network-side ports of both the first electrical switch module (20) and the second electrical switch module(120).

9. An optical node in accordance with any one of claims 1 to 8, wherein a rate-adjustable modulated laser source comprises an adjustable modulator adapted to selectively employ a plurality of modulation formats.

10. An optical node in accordance with claim 9, wherein the modulation formats are selected in the group consisting of SP-QPSK, QPSK, SP-8QAM, 8QAM, SP-16QAM, 16QAM and 32QAM.

11. An optical node in accordance with any one of claims 1 to 10, wherein a rate-adjustable modulated laser source comprises an adjustable modulator adapted to selectively employ a plurality of symbol rates.

12. An optical node in accordance with claim 11, wherein the symbol rates are between 10 and 100 Gbaud.

13. An optical node in accordance with any one of claims 1 to 12, wherein a WDM transponder module comprises the client-side ports in a higher number than the number of network-side ports in one client-infierface module.

14. An optical node in accordance with any one of claims 1 to 13, further comprising an all-optical switching fabric connected to the WDM transponder modules (30).

15. An optical node in accordance with any one of claims 1 to 14, wherein a client-side port of a client interface module comprises a transceiver compliant to an XFP or CFP multi-source agreement.

## Amended claims

### Amended claims in accordance with Rule 137(2) EPC.

1. An optical node (1) for a WDM communication system, comprising:
a plurality of client interface modules (10), each client interface module comprising:
a client-side port (7)for receiving a client service,
a plurality of network-side ports, and
a segmentation block (7) for segmenting the or each received client service into a plurality of data streams (11) at predefined data rates and passing each data stream to a network-side port of the client interface module;
a plurality of WDM transponder modules (30), each adjustable WDM transponder module comprising:
a plurality of client-side ports for receiving a plurality of data streams (11) at the predefined data rates,
an encapsulation block (35) for encapsulating the received data streams into transport data frames,
an electrical switch module (20) comprising:
a plurality of client-side ports (22) connected to the network-side ports of the client interface modules (10) for receiving the data streams (11) at the predefined data rates,
a plurality of network-side ports (23) connected to the client-side ports of the adjustable WDM transponder modules for passing the data streams (11) to the adjustable WDM transponder modules (30), and
a switch matrix (21) configured to create a plurality of transmission paths, each transmission path connecting a respective client-side port (22) to a respective network-side port (23) and adapted to pass a respective data stream from the client-side port to the network-side port,
wherein the switch matrix is configured to pass all the data streams of a same client service to a same adjustable WDM transponder module,
**characterized in that**
the WDM transponder modules (30) are adjustable WDM transponder modules further comprising a rate-adjustable modulated laser source (31) adapted to generate an optical signal (32) carrying the transport data frames at an adjustable transport data rate on a wavelength channel of a frequency grid; and
a total number of the network-side ports connected to the adjustable WDM transponder modules (30) is higher than a total number of the client-side ports connected to the client interface modules (10).

2. An optical node in accordance with claim 1, configured in a bidirectional manner, wherein each of the client interface modules (10), adjustable WDM transponder modules (30) and electrical switch module (20) are bidirectional,
wherein each adjustable WDM transponder module (30) further comprises an optical receiver adapted to demodulate a dropped optical signal (33) carrying transport data frames on a wavelength channel and a segmentation block (35) for segmenting the received transport data frames into a plurality of dropped data streams at the predefined data rates and passing each dropped data stream to a client-side port of the adjustable WDM transponder module;
wherein the transmission paths created by the switch matrix (21) between the client-side ports and network-side ports are bidirectional, and
wherein each client interface module (10) is configured to transmit a client service comprising a plurality of the dropped data streams through the client-side port of the client interface module.

3. An optical node in accordance with claim 1 or 2, further comprising a Field Programmable Gate Array configured to provide the switch matrix (21).

4. An optical node in accordance with any one of claims 1 to 3, wherein the predefined data rates are selected in the group consisting of 10Gb/s and 25Gb/s.

5. An optical node in accordance with any one of claims 1 to 4, wherein a client service comprises one of a 100Gigabit Ethernet traffic flow and a 40Gigabit Ethernet traffic flow and wherein the data streams (11) are obtained by segmenting the client service comprise a plurality of physical lanes of the traffic flow.

6. An optical node in accordance with any one of claims 1 to 5, further comprising a set of optical fibers (29) connecting the network-side ports of the client interface modules to the client-side ports of the electrical switch module.

7. An optical node in accordance with any one of claims 1 to 6, further comprising a set of optical fibers (29) connecting the network-side ports of the electrical switch module to the client-side ports of the WDM transponder modules.

8. An optical node in accordance with any one of claims 1 to 7, further comprising a second electrical switch module (120) comprising:
a second plurality of client-side ports connected to the network-side ports of the client interface modules for receiving the data streams at the predefined data rates,
a second plurality of network-side ports connected to the client-side ports of the adjustable WDM transponder modules for passing the data streams to the adjustable WDM transponder modules, and
a second switch matrix (21) configurable to create a second plurality of transmission paths, each transmission path connecting a respective client-side port to a respective network-side port and adapted to pass a respective data stream from the client-side port to the network-side port, wherein a total number of the network-side ports connected to the adjustable WDM transponder modules is higher than a total number of the client-side ports connected to the client interface modules,
wherein each network-side port of the client interface modules (10) is connected in parallel to client-side ports of both the first electrical switch module (20) and the second electrical switch module (120) and
wherein each client-side port of the WDM transponder modules (30) is connected in parallel to network-side ports of both the first electrical switch module (20) and the second electrical switch module(120).

9. An optical node in accordance with any one of claims 1 to 8, wherein a rate-adjustable modulated laser source comprises an adjustable modulator adapted to selectively employ a plurality of modulation formats.

10. An optical node in accordance with claim 9, wherein the modulation formats are selected in the group consisting of SP-QPSK, QPSK, SP-8QAM, 8QAM, SP-16QAM, 16QAM and 32QAM.

11. An optical node in accordance with any one of claims 1 to 10, wherein a rate-adjustable modulated laser source comprises an adjustable modulator adapted to selectively employ a plurality of symbol rates.

12. An optical node in accordance with claim 11, wherein the symbol rates are between 10 and 100 Gbaud.

13. An optical node in accordance with any one of claims 1 to 12, wherein a WDM transponder module comprises the client-side ports in a higher number than the number of network-side ports in one client-interface module.

14. An optical node in accordance with any one of claims 1 to 13, further comprising an all-optical switching fabric connected to the WDM transponder modules (30).

15. An optical node in accordance with any one of claims 1 to 14, wherein a client-side port of a client interface module comprises a transceiver compliant to an XFP or CFP multi-source agreement.
